# EUROPEAN PATENT APPLICATION

(11) **EP 2 474 672 A1**
(43) Date of publication of application: **11.07.2012**
(21) Application number: 10813714.2
(22) Date of filing: 01.09.2010
(51) Int. Cl.: E02F 9/00, E02F 9/16

(54) **WHEEL TYPE WORKING VEHICLE**

(30) Priority: 02.09.2009 JP 2009202372
(71) Applicant: Hitachi Construction Machinery Co., Ltd., Bunkyo-ku Tokyo 112-0004 (JP)
(72) Inventor: MURAMOTO Hiroaki, Tsuchiura-shi Ibaraki 300-0013 (JP)
(74) Representative: MERH-IP Matias Erny Reichl Hoffmann
(86) International application number: PCT/JP2010/064886
(87) International publication number: WO 2011/027765

(57) **Abstract**

An ascending and descending step (24) is provided between a front fender mounting plate (22) and a rear fender mounting plate (23) provided in a chassis (17), and a tool box (31) is provided in a tool box accommodating space (25) surrounded by the front fender mounting plate (22), the rear fender mounting plate (23) and the ascending and descending step (24). An opening portion (32G) is provided in an outer side surface (32E) in the tool box (31), and the opening portion (32G) is opened/closed by a lid member (34). On the other hand, a urea water solution tank (35) is arranged in the tool box (31), and a water supply port (35G) of the urea water solution tank (35) is provided in the tool box (31). The respective fender mounting plates (22), (23) and the ascending and descending step (24) prevent earth and sand splashed at the time of the traveling of a hydraulic excavator (1) from colliding with the tool box (31) to protect the urea water solution tank (35) in the tool box (31).

## Description

### TECHNICAL FIELD

The present invention relates to a wheel type working vehicle which is provided with right and left front wheels and right and left rear wheels to be able to travel on a general road.

### BACKGROUND ART

In general, a wheel type hydraulic excavator is known as a representative example of a wheel type working vehicle. The wheel type working vehicle is constituted by an automotive wheel type lower traveling structure, an upper revolving structure swingably mounted through a revolving ring on the lower traveling structure, and a working mechanism provided liftably in a front side of the upper revolving structure, wherein the working mechanism is used to perform an excavating operation of earth and sand and the like.

The wheel type lower traveling structure is constituted by a chassis extending in the front and rear directions, right and left front wheels and right and left rear wheels provided in the chassis through an axle, and a tool box provided in the chassis for accommodating tools and the like. The upper revolving structure is constituted by a revolving frame mounted on the chassis through the revolving ring, a counterweight provided in a rear end side of the revolving frame, an engine provided in the revolving frame to be positioned in front of the counterweight for driving a hydraulic pump, and a housing cover for accommodating the engine, the hydraulic pump and the like.

Incidentally, a diesel engine is generally adopted as the engine of the hydraulic excavator, and the diesel engine discharges a large number of nitrogen oxides (hereinafter, called NOx). Therefore, it is proposed that a NOx purifying device is provided in the hydraulic excavator with the diesel engine mounted therein, and the NOx purifying device with a urea selective reduction catalyst (urea SCR) is well known (Patent Document 1: Japanese Patent Laid-Open No. 2000-27627 A).

The NOx purifying device using the urea selective reduction catalyst is regularly constituted by a urea water solution tank for reserving a urea water solution, an inj ection nozzle connected to the urea water solution tank for injecting urea water into an exhaust pipe of the engine, and a urea selective reduction catalyst for reducing NOx in the exhaust gas mixed with the urea water (ammonia) to water and nitrogen. The NOx purifying device injects the urea water solution from the injection nozzle to be mixed with the exhaust gas, and causes a reduction reaction of the exhaust gas by the urea selective reduction catalyst to decompose the NOx in the exhaust gas into water and nitrogen.

Incidentally, the upper revolving structure in the hydraulic excavator is constructed of the revolving frame as a base, the counterweight mounted on the revolving frame, a cab, a fuel tank, an operating oil tank, the housing cover, and the like. The housing cover accommodates therein many mount devices such as the engine, the hydraulic pump, a heat exchanger, and a control valve. Further, the upper revolving structure in the hydraulic excavator is formed in a compact size as many as possible in such a manner as to be able to perform a smooth revolving operation also in a narrow working site.

Therefore, since many devices are mounted on the upper revolving structure in the hydraulic excavator, it is difficult to secure a new space for installing the urea water solution tank constituting the NOx purifying device. Even if the new space can be secured in the upper revolving structure to install the urea water solution tank, it is difficult to have access to the tank from a ground since the upper revolving structure is located in a high position from the ground, thus leading to deterioration of operability in a water supply operation. Further, when a temperature of the urea water solution rises to 40° or more, the urea water solution generates ammonia. Therefore, the urea water solution tank is required to be located at a constant distance from the device such as an engine or a control valve a temperature of which rises to a high degree at the time of the operating thereof.

Meanwhile, there is proposed a hydraulic excavator constructed in such a manner as to mount the urea water solution tank of the NOx purifying device in an outside of a truck frame constituting a crawler type lower traveling structure. According to this configuration, it can be certainly restricted for the urea water solution in the tank to be exposed to heat from the engine or the like (Patent Document 2: Japanese Patent Laid-Open No. 2008-215003 A).

### SUMMARY OF THE INVENTION

However, in the aforementioned conventional art, the urea water solution tank is mounted in the outside of the truck frame constituting the lower traveling structure. Therefore, for example, when earth and sand falling down from a bucket at the time of an excavating operation collide with the urea water solution tank or obstacles in the surroundings make contact with the urea water solution tank at the time of traveling in the working site, there is a possibility that the urea water solution tank is damaged. In addition, for performing the water supply operation, it is necessary for an operator to enter under the upper revolving structure, and although the access from the ground is possible, it is difficult to sufficiently secure a space for the water supply operation or a working posture of an operator.

On the other hand, in the wheel type hydraulic excavator, an outrigger, a blade device (blade), a support table for a bucket and the like are regularly provided at both sides of the chassis in the front and rear directions constituting the lower traveling structure, and tool box and the like are provided at both sides of the chassis in the right and left directions. Therefore, there occurs a problem that it is difficult to secure a space for installing the urea water solution tank in the chassis of the wheel type hydraulic excavator.

In view of the above-discussed problems with the conventional art, it is an object of the present invention to provide a wheel type working vehicle which can secure a working space at the time of performing a water supply operation and install a urea water solution tank to a lower traveling structure.

(1) In order to overcome the aforementioned problems, the present invention is applied to a wheel type working vehicle which comprises an automotive lower traveling structure, and an upper revolving structure swingably mounted through a revolving ring on the lower traveling structure and provided with an engine as a power source mounted thereon, wherein the lower traveling structure is constituted by a chassis on which right and left front wheels and right and left rear wheels are provided and a tool box provided in the chassis for accommodating tools and the like, and wherein an exhaust pipe of the engine is provided with a urea selective reduction catalyst for selectively reducing nitrogen oxides in an exhaust gas.

Further, the constitution adopted by the present invention is **characterized in that** a urea water solution tank positioned upstream of the urea selective reduction catalyst for reserving a urea water solution to be injected into the exhaust pipe is provided in the tool box mounted in the chassis.

With this arrangement, by providing the urea water solution tank by use of the tool box mounted in the chassis, the urea water solution tank can be installed in a lower place from a ground and a large working space can be secured in the circumference of the urea water solution tank. Therefore, operability at the time of performing the water supply operation of the urea water solution and a maintenance operation of inspection, maintenance or the like to the urea water solution tank can be enhanced.

Further, since the tool box is mounted in the chassis of the lower traveling structure, the urea water solution tank can be installed at a distance away from the engine positioned at a side of the upper revolving structure, thereby to restrict a temperature of the urea water solution to increase due to heat generated from the engine or the like. Therefore, the urea water solution is mixed with an exhaust gas and the exhaust gas is subjected to a reduction reaction by the urea selective reduction catalyst, and thus NOx in the exhaust gas can be certainly decomposed into water and nitrogen.

(2) According to the present invention, the wheel type working vehicle may be constituted in such a manner that the chassis is provided with a front fender mounting plate positioned in rear of the front wheel for mounting a front fender and a rear fender mounting plate positioned in front of the rear wheel for mounting a rear fender mounted therein to be spaced from each other, an ascending and descending step disposed between the front fender mounting plate and the rear fender mounting plate for ascending to and descending from the upper revolving structure, and the tool box disposed in a tool box accommodating space surrounded by the front fender mounting plate, the rear fender mounting plate and the ascending and descending step.

With this arrangement, by providing the tool box in the tool box accommodating space surrounded by the front fender mounting plate, the rear fender mounting plate and the ascending and descending step provided in the chassis, the front fender mounting plate, the rear fender mounting plate and the ascending and descending step can prevent earth and sand or the like splashed by the front wheel and the rear wheel at the traveling of the wheel type working vehicle from colliding with the urea water solution tank provided in the tool box. As a result, damage of the urea water solution tank can be restricted to extend the lifetime.

(3) According to the present invention, the tool box is constituted by a box of which an outer side surface directed outside is open and a lid member for closing an opening of the box to be capable of opening/closing, the urea water solution tank is provided in the box, and a water supply port of the urea water solution tank is provided to be positioned in the box, wherein the lid member is opened to supply the urea water solution through the water supply port.

With this arrangement, by providing the urea water solution tank in the box constituting the tool box, the box of the tool box can protect the urea water solution tank. Accordingly, the box can prevent earth and sand falling off from the bucket at the time of the excavating operation of the wheel type working vehicle and earth and sand splashed by the wheel at the traveling of the wheel type working vehicle or the like from colliding with the urea water solution tank. As a result, the lifetime of the urea water solution tank can be extended.

In addition, the water supply port of the urea water solution tank located in the box can be hidden from outside by closing the opening of the box with the lid member, which therefore, can prevent a problem that a foreign object different from the urea water solution is filled in the urea water solution tank by mischief, for example. Further, since a large working space can be secured in the circumference of the water supply port of the urea water solution tank by an internal space in the box, the operability at the time of performing the water supply operation to the urea water solution tank can be enhanced.

(4) According to the present invention, the urea water solution tank may be formed as a container different from the box or as a container integral with the box.

With this arrangement, in a case of mounting the urea water solution tank formed of the container different from the box to the box, only the urea water solution tank may be formed by using a material having a corrosion resistance to the urea water solution to manufacture the urea water solution tank inexpensively. In a case where there occurs a defect in the urea water solution tank, a replacement operation of the urea water solution tank can be quickly and easily performed by replacing it for a new urea water solution tank to be mounted in the tool box.

On the other hand, in a case of mounting the urea water solution tank formed of the container integral with the box to the box, since the box and the urea water solution tank can be formed integrally, as compared to a case of using the urea water solution tank formed of the container different from the box, the number of components in use can be reduced to easily mount the urea water solution tank.

(5) According to the present invention, the urea water solution tank may be formed as a container made of a member different from the tool box to mount the container of the urea water solution tank to the tool box to be adjacent thereto.

With this arrangement, the urea water solution tank can be mounted using the tool box without reducing the accommodating space in the tool box. In this case, since the urea water solution tank is formed of the container made of the member different from the tool box, in a case where there occurs a defect in the urea water solution tank, a new urea water solution tank can be easily mounted on the tool box by its replacement.

### BRIEF DESCRIPTION OF THE DRAWINGS

Fig. 1 is a front view showing a wheel type hydraulic excavator according to a first embodiment in the present invention.
Fig. 2 is a perspective view showing a chassis, fender mounting plates, an ascending and descending step, a tool box and the like in Fig. 1.
Fig. 3 is an exploded perspective view showing the chassis, the fender mounting plates, the ascending and descending step, and the tool box.
Fig. 4 is an arrangement diagram schematically showing an entire arrangement of a NOx purifying device together with an engine and the like.
Fig. 5 is a perspective view showing the tool box and a urea water solution tank according to the first embodiment.
Fig. 6 is a cross-sectional view showing the tool box and the urea water solution tank as viewed from a direction of arrows VI-VI in Fig. 5.
Fig. 7 is a perspective view showing a tool box and a urea water solution tank according to a second embodiment.
Fig. 8 is a cross-sectional view showing the tool box and the urea water solution tank as viewed from a direction of arrows VIII-VIII in Fig. 7.
Fig. 9 is a perspective view showing a tool box and a urea water solution tank according to a third embodiment.
Fig. 10 is a cross-sectional view showing the tool box and the urea water solution tank as viewed from a direction of arrows X-X in Fig. 9.
Fig. 11 is a perspective view showing a tool box and a urea water solution tank according to a modification.
Fig. 12 is a cross-sectional view showing the tool box and the urea water solution tank as viewed from a direction of arrows XII-XII in Fig. 11.

### MODE FOR CARRYING OUT THE INVENTION

Hereinafter, embodiments of a wheel type working vehicle according to the present invention will be described more particularly with reference to the accompanying drawings, by citing as an example a case where the wheel type working vehicle is applied to a wheel type hydraulic excavator.

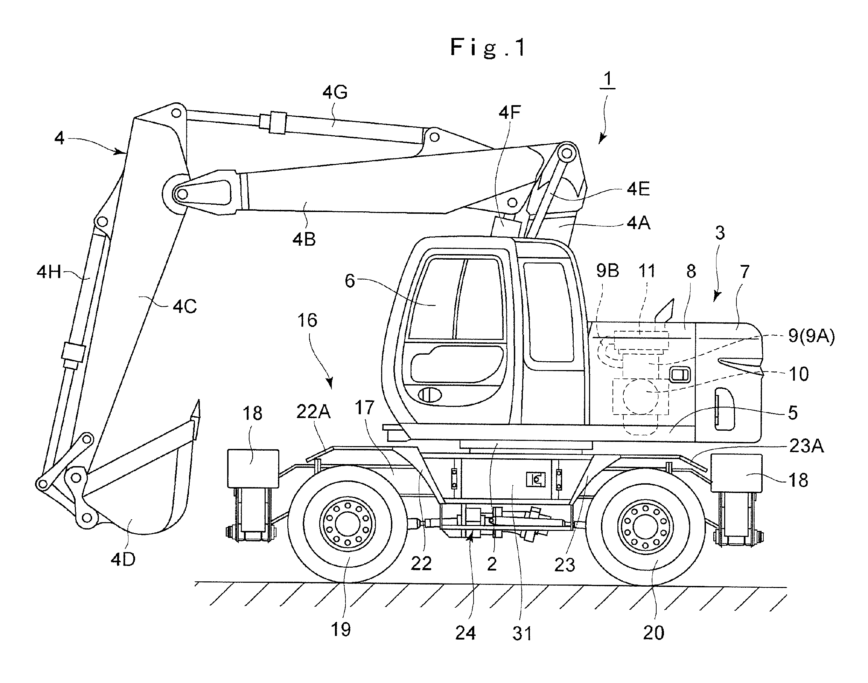

Fig. 1 to Fig. 6 show a wheel type hydraulic excavator according to a first embodiment in the present invention.

In the figure, designated at 1 is a wheel type hydraulic excavator as a representative example of a wheel type working vehicle. The wheel type hydraulic excavator 1 is constituted by an automotive wheel type lower traveling structure 16, an upper revolving structure 3 swingably mounted on the lower traveling structure 16 through a revolving ring 2, and a working mechanism 4 provided liftably on a front side of the upper revolving structure 3, which will be described hereinafter. The wheel type hydraulic excavator 1 travels on a general road by the wheel type lower traveling structure 16 and serves to perform an excavating operation of earth and sand by using the working mechanism 4 at a working site.

The working mechanism 4 is constituted by a lower boom 4A having a base end side mounted in a front side of a revolving frame 5 to be tiltable in the upper and lower directions, an upper boom 4B tiltably mounted in a top end side of the lower boom 4A, an arm 4C tiltably mounted in a top end side of the upper boom 4B, a bucket 4D tiltably mounted in a top end side of the arm 4C, a boom cylinder 4E, a positioning cylinder 4F, an arm cylinder 4G, and a bucket cylinder 4H.

On the other hand, the upper revolving structure 3 is constituted by the revolving frame 5 swingably mounted on a chassis 17 to be described later through the revolving ring 2, a cab 6 provided in a front left side of the revolving frame 5 to define an operating room, a counterweight 7 provided in a rear end side of the revolving frame 5 to act as a weight balance with the working mechanism 4, and a housing cover 8 provided on the revolving frame 5 to be positioned in front of the counterweight 7.

An engine 9 as a power source arranged in a horizontal state to extend in the right and left directions, a hydraulic pump 10 driven by the engine 9, and a urea selective reduction catalyst 12, a urea water solution injection device 13 and a conduit 14, which will be described later, and the like are accommodated in the housing cover 8.

The engine 9 is constituted by a diesel engine including an engine body 9A and an exhaust pipe 9B for discharging an exhaust gas from the engine body 9A. In this case, the engine 9 constituted by the diesel engine achieves a high efficiency and is advantageous in durability, and on the other hand, has a defect that harmful substances such as nitrogen oxides (NOx) are discharged as the exhaust gas.

In contrast, the wheel type hydraulic excavator 1 according to the first embodiment is equipped with a NOx purifying device in which urea water is mixed with an exhaust gas, and the exhaust gas is subjected to a reduction reaction in the urea selective reduction catalyst (urea SCR) to be decomposed into water and nitrogen. The NOx purifying device is constituted by a catalyst case 11, the urea selective reduction catalyst 12 and the urea water solution injection device 13 provided in the upper revolving structure 3, which will be described later, and a urea water solution tank 35 provided in the lower traveling structure 16 to be described later, and the like.

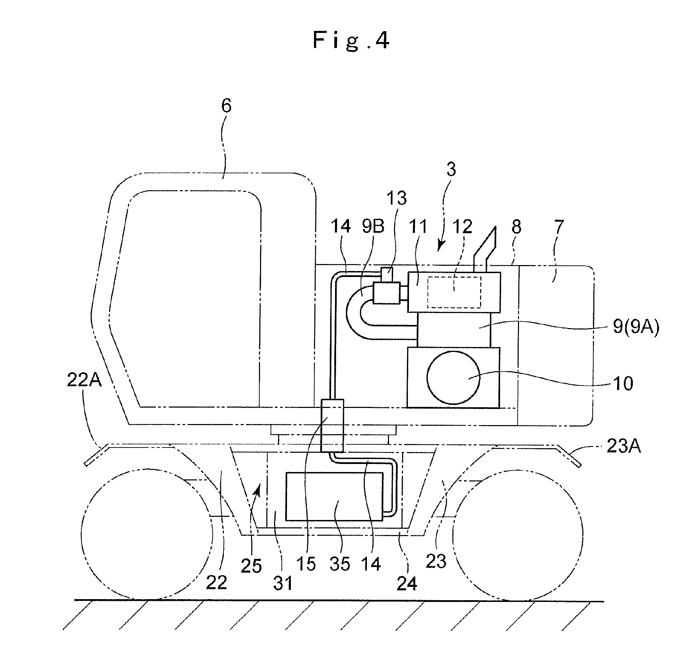

Indicated at 11 is the catalyst case provided above the engine 9 to be positioned in the housing cover 8, and the catalyst case 11 is provided in the middle of the exhaust pipe 9B in the engine 9. As shown in Fig. 4, the catalyst case 11 accommodates the urea selective reduction catalyst 12 to be described later, an oxidation catalyst for removing ammonia, a particulate matter purifying filter (both not shown), and the like therein.

Indicated at 12 is the urea selective reduction catalyst constituting the NOx purifying device, and the urea selective reduction catalyst 12 is accommodated in the catalyst case 11 to be positioned downstream of the urea water solution injection device 13 to be described later. The urea selective reduction catalyst 12 causes a reduction reaction of NOx in the exhaust gas by ammonia generated from the urea water, thus decomposing the NOx into water (H₂O) and nitrogen (N₂).

Indicated at 13 is the urea water solution injection device mounted in the exhaust pipe 9B in the engine 9 to be positioned upstream of the urea selective reduction catalyst 12. The urea water solution injection device 13 injects a urea water solution reserved in the urea water solution tank 35 to be described later to an exhaust gas flowing in the exhaust pipe 9B. Here, the urea water solution injection device 13 is constructed to be connected to a controller (not shown) for appropriately adjusting an injection amount of the urea water solution corresponding to conditions such as a flow amount, a temperature, and components of the exhaust gas, and the like.

Indicated at 14 is the pipe provided to establish connection between the urea water solution injection device 13 and the urea water solution tank 35 to be described later. As shown in Fig. 4, the pipe 14 has one end side connected to the urea water solution tank 35 and the other end side connected to the urea water solution injection device 13 through a center joint 15. The pipe 14 serves to suck up the urea water solution in the urea water solution tank 35 by a pump (not shown) and introduce the urea water solution to the urea water solution injection device 13 through the center joint 15.

Next, designated at 16 is the lower traveling structure in the wheel type hydraulic excavator 1 applied to the first embodiment. The lower traveling structure 16 is constituted by a wheel type lower traveling structure which can travel on a general road and is constituted by the chassis 17 to be described later, right and left front wheels 19, right and left rear wheels 20, front fender mounting plates 22, rear fender mounting plates 23, a tool box 31, the urea water solution tank 35 and the like.

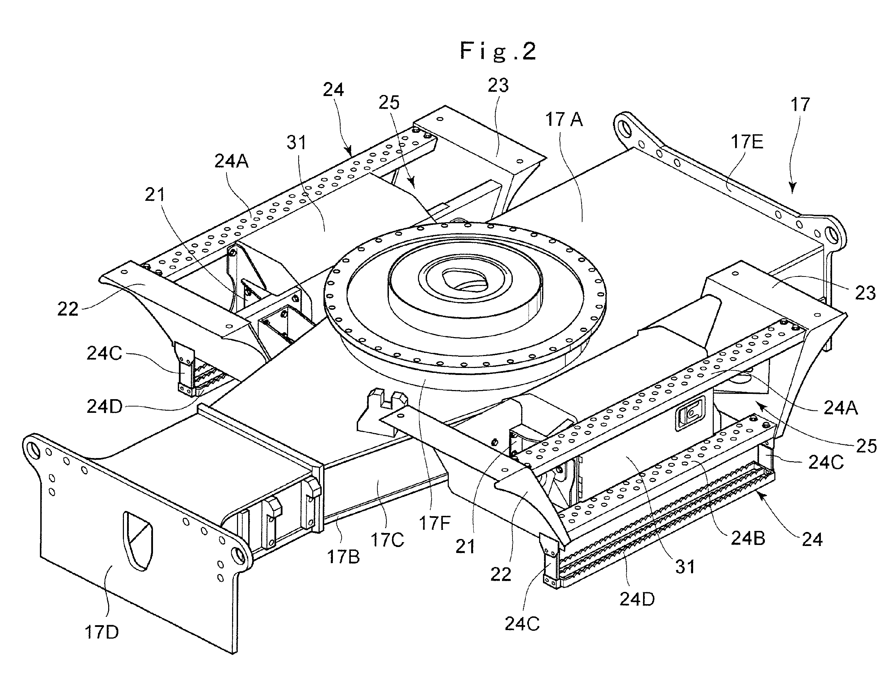

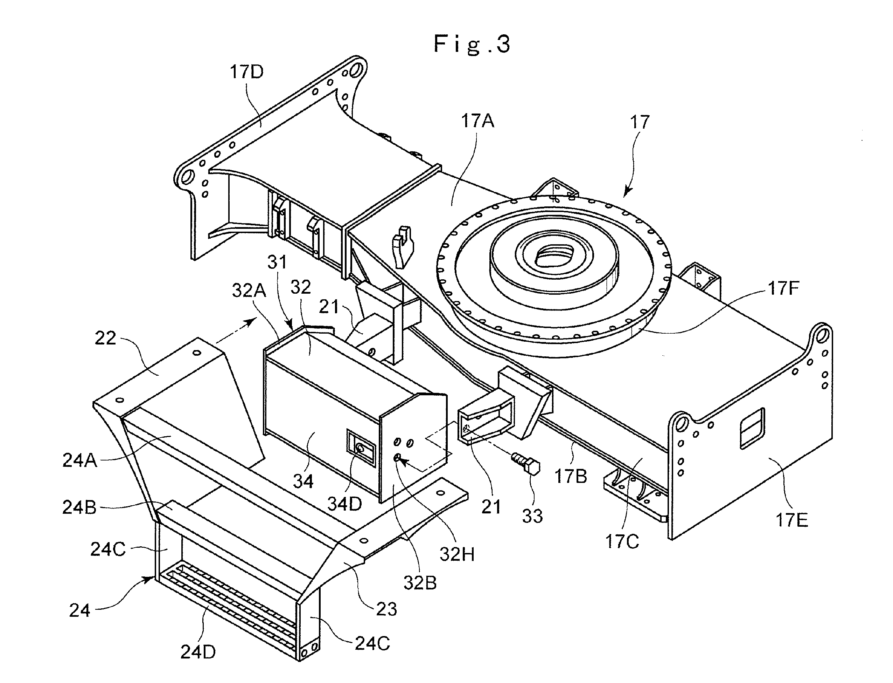

Denoted at 17 is the chassis serving as a base of the lower traveling structure 16, and the chassis 17 is arranged to extend in the front and rear directions. As shown in Fig. 2 and Fig. 3, the chassis 17 is formed as a box structure surrounded by a top plate 17A extending in the front and rear directions, a bottom plate 17B facing the top plate 17A in the upper and lower directions, and side plates 17C arranged between the top plate 17A and the bottom plate 17B to face with each other in the right and left directions.

The chassis 17 has both end sides in the front and rear directions respectively provided with a front connecting plate 17D and a rear connecting plate 17E fixed thereto. An outrigger 18 shown in Fig. 1 is mounted on each of the connecting plates 17D and 17E. A cylindrical round member 17F is provided in the intermediate portion of the top plate 17A in the front and rear directions constituting the chassis 17, and the upper revolving structure 3 is mounted on the round member 17F through the revolving ring 2.

Here, a front axle (not shown) extending in the right and left directions is arranged in a front end side of the bottom plate 17B constituting the chassis 17, and the right and left front wheels 19 (left wheel only shown) are mounted in both end sides of the front axle to be capable of performing a steering operation. A rear axle (not shown) extending in the right and left directions is arranged in a rear end side of the bottom plate 17B, and the right and left rear wheels 20 (left wheel only shown) are mounted in both end sides of the rear axle.

Denoted at 21 are front and rear brackets respectively provided in the intermediate position in the front and rear directions of the side plates 17C constituting the chassis 17. As shown in Fig. 3, the respective brackets 21 are arranged to be spaced from each other in the front and rear directions and protrude from the side plate 17C to an outside. Further, the tool box 31 to be described later is mounted in a top end side of each bracket 21. It should be noted that in Fig. 3, only the brackets 21 provided in the left side plate 17C are illustrated, but the similar brackets are also provided in the right side plate 17C (see Fig. 2).

Indicated at 22 are right and left front fender mounting plates provided in the chassis 17 to be positioned in the rear side of the right and left front wheels 19. The front fender mounting plate 22 is used for mounting a front fender 22A shown in Fig. 1 and is constituted by a plate member having a width dimension in the right and left directions equal to the front wheel 19 and folded in a substantially L-shape, and is mounted on the side plate 17C of the chassis 17 by using bolts and the like (not shown). The front fender mounting plate 22 and the front fender 22A cover the front wheel 19 in a region from the upward over the backward thereof in a state of protruding from the side plate 17C to an outside to prevent muddy water splashed by the front wheel 19 from being adhered on the tool box 31 to be described later and the like.

Indicated at 23 are right and left rear fender mounting plates provided in the chassis 17 to be positioned in front of the right and left rear wheels 20. The rear fender mounting plate 23 is used for mounting a rear fender 23A shown in Fig. 1 and is constituted by a plate member having a width dimension in the right and left directions equal to the rear wheel 20 and folded in a substantially L-shape, and is mounted on the side plate 17C of the chassis 17 by using bolts and the like (not shown) in a state of facing the front fender mounting plate 22 sandwiching the bracket 21 therebetween to be spaced from each other in the front and rear directions. Here, the rear fender mounting plate 23 and the rear fender 23A cover the rear wheel 20 in a region from the forward over the upward thereof in a state of protruding from the side plate 17C to an outside.

Indicated at 24 are right and left ascending and descending steps each provided between a protrusion end side of the front fender mounting plate 22 and a protrusion end side of the rear fender mounting plate 23. The ascending and descending step 24 serves as a foothold of an operator when the operator ascends and descends between a cab 6 (upper revolving structure 3) and the ground. Here, the ascending and descending step 24 is constituted by an upper step 24A fixed between upper end portions of the front and rear fender mounting plates 22 and 23 and extending in the longitudinal direction, an intermediate step 24B fixed between lower end portions of the front and rear fender mounting plate 22 and 23 and extending in the longitudinal direction under the upper step 24A, and a lower step 24D fixed to a lower end portion of the front and rear fender mounting plates 22 and 23 through each of the stays 24C and extending in the longitudinal direction under the intermediate step 24B.

Denoted at 25 are right and left tool box accommodating spaces each surrounded by the front fender mounting plate 22, the rear fender mounting plate 23 and the ascending and descending step 24. Each of the tool box accommodating spaces 25 is formed in each side of the chassis 17 in the right and left directions as sandwiching the chassis 17 therebetween, and the tool box 31 to be described later is accommodated in each tool box accommodating space 25.

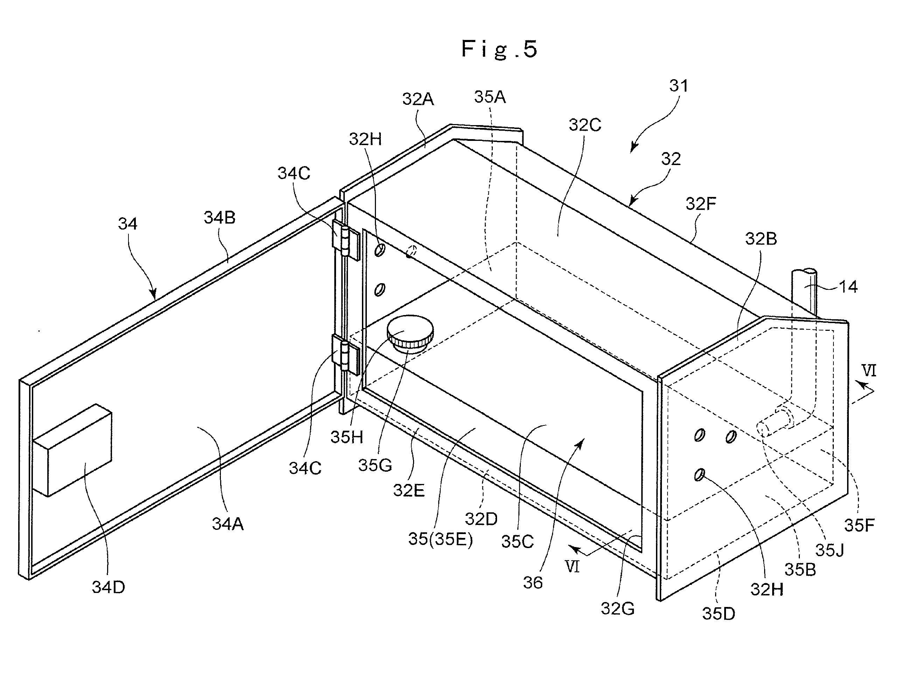

Next, designated at 31 are right and left tool boxes provided in the chassis 17 according to the first embodiment. The tool box 31 is located in the tool box accommodating space 25, and the urea water solution tank 35 to be described later is provided therein. As shown in Fig. 3 and Fig. 5, the tool box 31 is formed in a rectangular shape extending the longitudinal direction as a whole and is constructed of a box 32 and a lid member 34, which will be described later. It should be noted that the right and left tool boxes 31 have the same construction, and therefore, in the following explanation, the left tool box 31 will be explained as an example.

Denoted at 32 is the box constituting a main body portion of the tool box 31, and the box 32 is surrounded by a front surface 32A, a rear surface 32B, a top surface 32C, a bottom surface 32D, an outer side surface 32E and an inner side surface 32F and extends in the longitudinal direction. A rectangular opening portion 32G is formed in the outer side surface 32E (side surface away from the chassis 17), and tools (not shown) are accommodated in the box 32 through the opening portion 32G.

Here, a plurality of bolt insert holes 32H are drilled respectively in the front surface 32A and the rear surface 32B of the box 32. As shown in Fig. 3, the box 32 in the tool box 31 is mounted to the side surface plate 17C of the chassis 17 through the front and rear brackets 21 by inserting bolts 33 into the respective brackets 21 provided on the side surface plate 17C of the chassis 17 and into the bolt insert holes 32H drilled in the front surface 32A and the rear surface 32B of the box 32, and then by threading nuts (not shown) into the bolts 33.

Indicated at 34 is the lid member for closing the opening portion 32G in the box 32 to be capable of opening and closing. The lid member 34 is constituted by a rectangular flat plate portion 34A extending in the longitudinal direction and a folded plate portion 34B provided in a frame shape over an entire periphery of an outer periphery edge portion in the flat plate portion 34A. The lid member 34 is mounted to a front end side of the box 32 by hinge members 34C and opens and closes around the hinge members 34C between a door opening position (position in Fig. 5) for opening the opening portion 32G of the box 32 and a door closing position (position in Fig. 3) for closing the opening portion 32G.

In addition, a locking mechanism 34D is provided in the lid member 34, and the lid member 34 can be fixed to the door closing position by the locking mechanism 34D. It should be noted that a dimension of the lid member 34 in the upper and lower directions (height direction) is set smaller than a gap between the upper step 24A and the intermediate step 24B constituting the ascending and descending step 24 in the upper and lower directions, and the lid member 34 is constructed to go through between the upper step 24A and the intermediate step 24B.

Next, designated at 35 is the urea water solution tank according to the first embodiment. In the first embodiment, the urea water solution tank 35 is illustrated in a case of being arranged in the left tool box 31 among the right and left tool boxes 31 arranged in both right and left sides of the chassis 17. The urea water solution tank 35 constitutes the NOx purifying device together with the aforementioned catalyst case 11, the urea selective reduction catalyst 12 and the urea water solution injection device 13 which are arranged in a side of the upper revolving structure 3. The urea water solution for being injected into the exhaust pipe 9B of the engine 9 is reserved in the urea water solution tank 35.

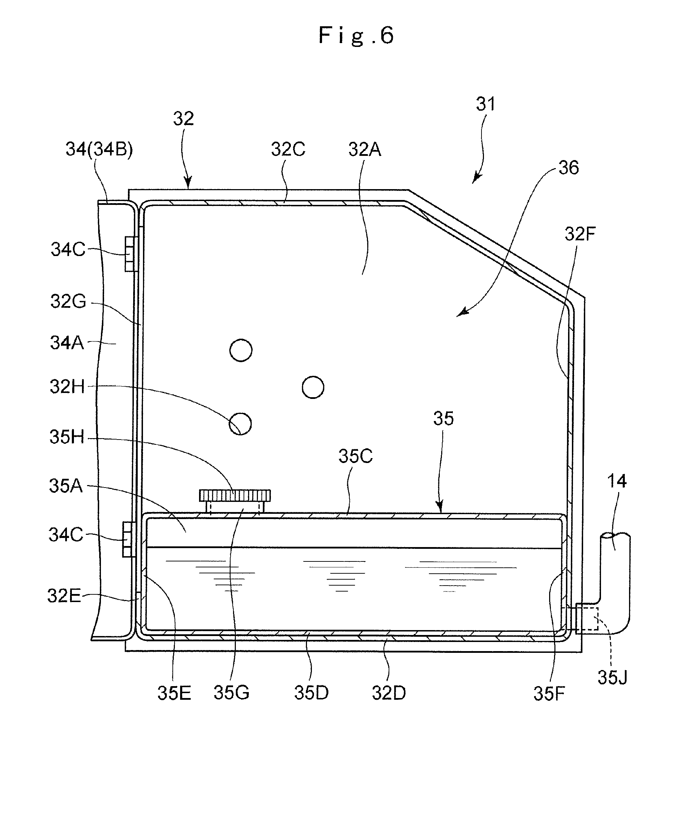

As shown in Fig. 5 and Fig. 6, the urea water solution tank 35 is composed of a container different from the box 32 in the tool box 31. The urea water solution tank 35 is made of a metal material excellent in a corrosion resistance to the urea water solution, for example, a stainless steel plate such as SUS 304, SUS 316, or the like. In addition, the urea water solution tank 35 is surrounded by a front surface 35A, a rear surface 35B, a top surface 35C, a bottom surface 35D, an outer side surface 35E and an inner side surface 35F. Further, the urea water solution tank 35 is a flat, rectangular closed container having a longer dimension in the front and rear directions and a smaller height dimension in the upper and lower directions. In this case, each of the top surface 35C and the bottom surface 35D in the urea water solution tank 35 is formed with an area slightly smaller than that of the bottom surface 32D in the box 32. The urea water solution tank 35 is arranged at the lower end side of the box 32 without a gap in a state of being placed on the bottom surface 32D in the box 32. It should be noted that the urea water solution tank 35 may be formed by using a resin material having a corrosion resistance, such as polyethylene, polypropylene or fluorocarbon resin.

A water supply port 35G for resupplying the urea water solution in the urea water solution tank 35 is formed in an angular corner portion of the top surface 35C to protrude upwards, and an upper end side (opening end) of the water supply port 35G is formed to be closed by a cap 35H. Further, an outlet port 35J for flowing out the urea water solution is formed to protrude at the lower end side of the inner side surface 35F positioned in a side of the chassis 17, and the outlet port 35J penetrates through the inner side surface 32F in the box 32 and protrudes outside of the tool box 31. One end side of the pipe 14 is connected to a protruding end side of the outlet port 35J and the other end side of the pipe 14 is connected to the urea water solution injection device 13 through the center joint 15.

In this case, the height dimension of the urea water solution tank 35 in the upper and lower directions is set smaller than that of the tool box 31 (box 32), and a large accommodating space 36 is formed above the urea water solution tank 35 in a state where the urea water solution tank 35 is arranged in the box 32. Therefore, the tools can be accommodated in the accommodating space 36 formed above the urea water solution tank 35 among the inner space of the box 32.

The urea water solution tank 35 is thus formed as a container different from the box 32 in the tool box 31 and is arranged in the box 32. Therefore, the tool box 31 can protect the urea water solution tank 35 and in addition thereto, can secure the large accommodating space 36 above the urea water solution tank 35. In addition, by closing the opening portion 32G in the box 32 with the lid member 34, the water supply port 35G of the urea water solution tank 35 can be hidden from outside.

The wheel type hydraulic excavator 1 according to the first embodiment has the above construction, and next, an operation and effect thereof will be explained.

The wheel type hydraulic excavator 1 travels toward a working site on a general road. After arriving at the working site, in a state where the vehicle body is stable by the outrigger 18 mounted on the chassis 17 of the lower traveling structure 16, the wheel type hydraulic excavator 1 uses the working mechanism 4 to perform an excavating operation of earth and sand while revolving the upper revolving structure 3.

Here, when the engine 9 is operated at the time of the traveling or the working of the wheel type hydraulic excavator 1, NOx (nitrogen oxides) as harmful substances is discharged from the exhaust pipe 9B in the engine 9. On the other hand, in the first embodiment, as shown in Fig. 4, the urea water solution reserved in the urea water solution tank 35 is sucked up by the pump (not shown) and is supplied to the urea water solution injection device 13 through the pipe 14 and center joint 15. By injecting the urea water solution into the exhaust pipe 9B from the urea water solution injection device 13, the NOx in the exhaust gas is decomposed into water and nitrogen by a reduction reaction of the urea selective reduction catalyst 12.

In this case, in the first embodiment, the urea water solution tank 35 reserving the urea water solution therein is formed as the container different from the box 32 constituting the tool box 31 and is arranged in the tool box 31.

Therefore, the urea water solution tank 35 can be installed in a low position from the ground, and the large accommodating space 36 formed above the urea water solution tank 35 can be used as a working space. Thereby a water supply operation for resupplying the urea water solution in the urea water solution tank 35 through the water supply port 35G or a maintenance operation such as an inspection and maintenance to the urea water solution tank 35 can be facilitated by using the accommodating space 36, thus enhancing the operability.

Further, the tool box 31 is mounted in the chassis 17 of the lower traveling structure 16, and the urea water solution tank 35 is provided in the tool box 31. As a result, since the urea water solution tank 35 can be installed in a place spaced from the engine 9, the hydraulic pump 10 and the like arranged in a side of the upper revolving structure 3, it can prevent a temperature of the urea water solution from rising by heat generated from the engine 9 and the like. Therefore, by injecting the urea water solution into the exhaust gas flowing in the exhaust pipe 9B of the engine 9 to cause a reduction reaction of the exhaust gas with the urea selective reduction catalyst 12, the NOx in the exhaust gas can be decomposed into water and nitrogen.

In addition, the urea water solution tank 35 is arranged in the box 32 in the tool box 31, by which the box 32 can prevent earth and sand falling down from the bucket 4D at the time of the excavating operation of the wheel type hydraulic excavator 1 or earth and sand kicked off by the front wheel 19 and the rear wheel 20 at the time of the traveling of the wheel type hydraulic excavator 1 from colliding with the urea water solution tank 35, for example, thus extending a lifetime of the urea water solution tank 35.

In this case, the tool box 31 is located in the tool box accommodating space 25 surrounded by the front fender mounting plate 22, the rear fender mounting plate 23 and the ascending and descending step 24, which are provided in the chassis 17 of the lower traveling structure 16. Therefore, at the time of the traveling of the wheel type hydraulic excavator 1, the front fender mounting plate 22, the rear fender mounting plate 23 and the ascending and descending step 24 can prevent earth and sand kicked off by the front wheel 19 and the rear wheel 20 from colliding with the tool box 31, thus securely restricting damage of the urea water solution tank 35 arranged in the tool box 31.

On the other hand, by closing the opening portion 32G in the box 32 with the lid member 34, the water supply port 35G of the urea water solution tank 35 arranged in the box 32 can be hidden from outside. This can prevent a problem that foreign objects different from the urea water solution are filled in the urea water solution tank 35 by mischief.

Further, the urea water solution tank 35 is formed as the container different from the box 32 constituting the tool box 31 and is arranged in the tool box 31. Therefore, since only the urea water solution tank 35 can be formed using a material having a corrosion resistance to the urea water solution, the urea water solution tank 35 can be manufactured inexpensively. In a case where there occurs a defect in the urea water solution tank 35, only the urea water solution tank 35 in which the defect has occurred is replaced for a new urea water solution tank 35, which can be mounted to the tool box 31, thus quickly and easily performing the replacement operation.

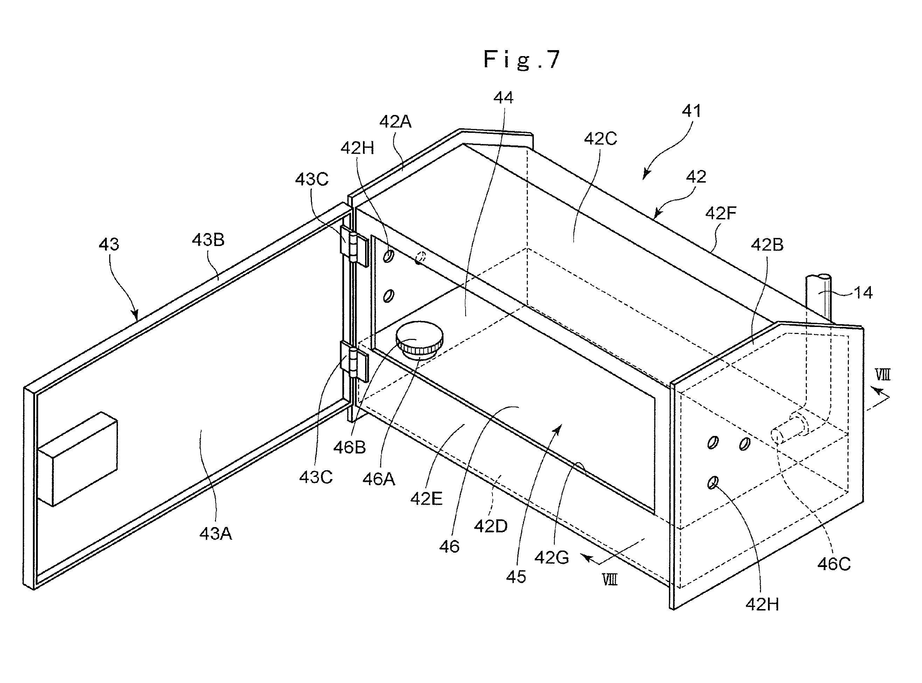

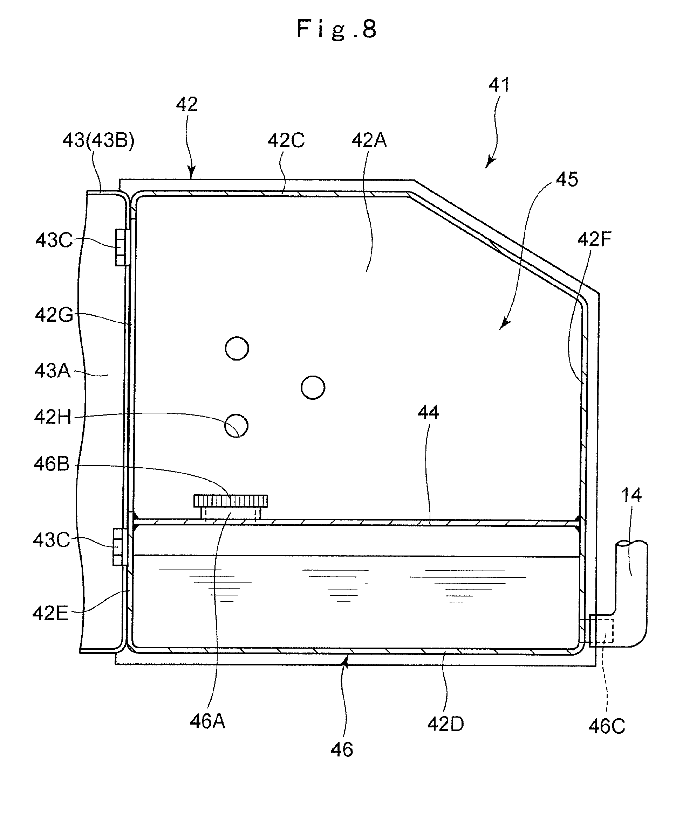

Next, Fig. 7 and Fig. 8 show a second embodiment in the present invention. The feature of the present embodiment lies in that a urea water solution tank is formed as a container integral with a box in a tool box. It should be noted that, in the second embodiment, the component elements that are identical to those of the foregoing first embodiment will be simply denoted by the same reference numerals to avoid repetitions of similar explanations.

In the figure, designated at 41 is a tool box used in the second embodiment. The tool box 41 is, as similar to the tool box 31 in the first embodiment as shown in Fig. 2, located in the tool box accommodating space 25 surrounded by the front fender mounting plate 22, the rear fender mounting plate 23 and the ascending and descending step 24, which are provided in the chassis 17 of the lower traveling structure 16.

The tool box 41 is constructed of a box 42 and a lid member 43 to be described later, and is formed in a rectangular box shape extending in the front and rear directions as a whole. In this case, a urea water solution tank 46 to be described later is formed integrally with the box 42.

Indicated at 42 is the box constituting a main body portion of the tool box 41, and the box 42 is formed to extend in the front and rear directions. The box 42 is surrounded by a front surface 42A, a rear surface 42B, a top surface 42C, a bottom surface 42D, an outer side surface 42E and an inner side surface 42F. An opening portion 42G is formed in the outer side surface 42E (side surface away from the chassis 17), and tools (not shown) are accommodated in the box 42 through the opening portion 42G. A plurality of bolt insert holes 42H are drilled in the front surface 42A and the rear surface 42B for mounting the box 42 to the brackets 21 in the chassis 17 shown in Fig. 2. Further, a partition plate 44 to be described later is provided in the box 42.

Indicated at 43 is the lid member for closing the opening portion 42G of the box 42 to be capable of opening and closing. The lid member 43 is constructed of a flat plate portion 43A and a folded plate portion 43B provided in a frame shape at an outer periphery edge portion in the flat plate portion 43A. The lid member 43 is mounted to a front end side of the box 42 by hinge members 43C and rotates around the hinge members 43C for opening/closing the opening portion 42G of the box 42.

Indicated at 44 is the partition plate provided between the top surface 42C and the bottom surface 42D of the box 42. The partition plate 44 is arranged under the opening portion 42G and is liquid-tightly fixed over an entire periphery on the inner side surface of the box 42 using means such as welding. In consequence, an inside of the box 42 is defined by an accommodating space 45 positioned above the partition plate 44 for accommodating tools and the urea water solution tank 46 to be described later positioned under the partition plate 44.

Designated at 46 is the urea water solution tank according to the second embodiment, and the urea water solution tank 46 is formed integrally with the box 42 constituting the tool box 41. The urea water solution tank 46 is arranged under the partition plate 44 provided in the box 42 and is formed as a closed container surrounded by the front surface 42A, the rear surface 42B, the bottom surface 42D, the outer side surface 42E, the inner side surface 42F of the box 42 and the partition plate 44.

A water supply port 46A is formed in an angular corner portion of the partition plate 44 constituting the top surface of the urea water solution tank 46 to protrude upwards, and an upper end side of the water supply port 46A is formed to be closed by a cap 46B. Accordingly, the water supply port 46A of the urea water solution tank 46 is arranged in the accommodating space 45 in the tool box 41, and an operation for resupplying the urea water solution in the urea water solution tank 46 through the water supply port 46A can be performed in the accommodating space 45 in the tool box 41. On the other hand, an outlet port 46C is formed to protrude at the lower end side of the inner side surface 42F of the box 42 constituting a side surface of the urea water solution tank 46. One end side of the pipe 14 shown in Fig. 4 is connected to a protruding end side of the outlet port 46C.

The wheel type hydraulic excavator according to the second embodiment has the tool box 41 as described above, and a basic operation thereof by providing the urea water solution tank 46 in the tool box 41 is not particularly different from that of the first embodiment described above.

Therefore, according to the second embodiment, since the urea water solution tank 46 composed of the closed container integral with the box 42 is provided in the box 42 in the tool box 41, the number of components in use can be reduced as compared to a case of using the urea water solution tank formed of the container different from the box 42 to reduce manufacturing costs of the tool box 41 including the urea water solution tank 46.

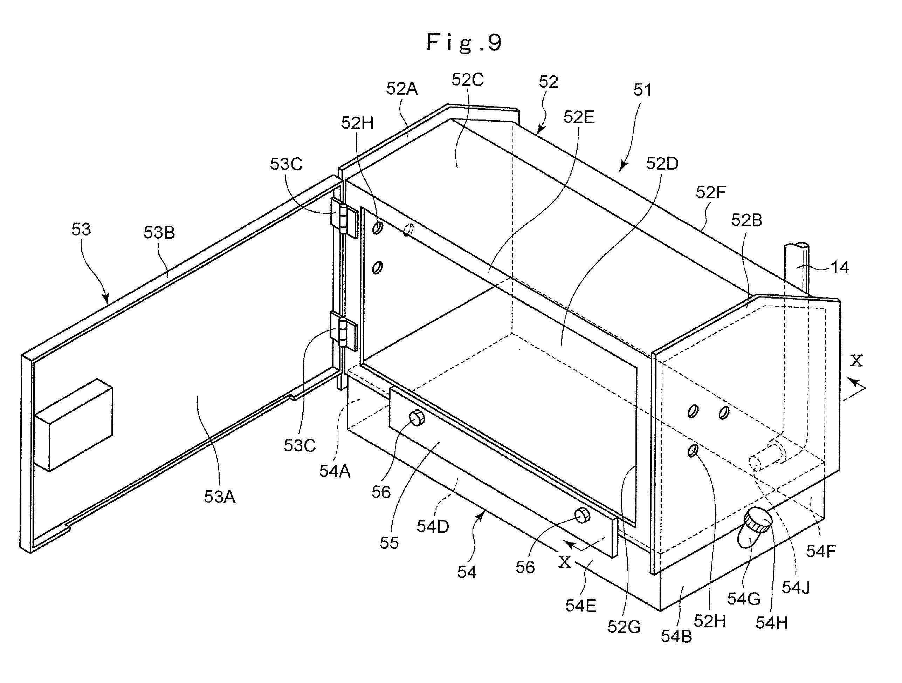

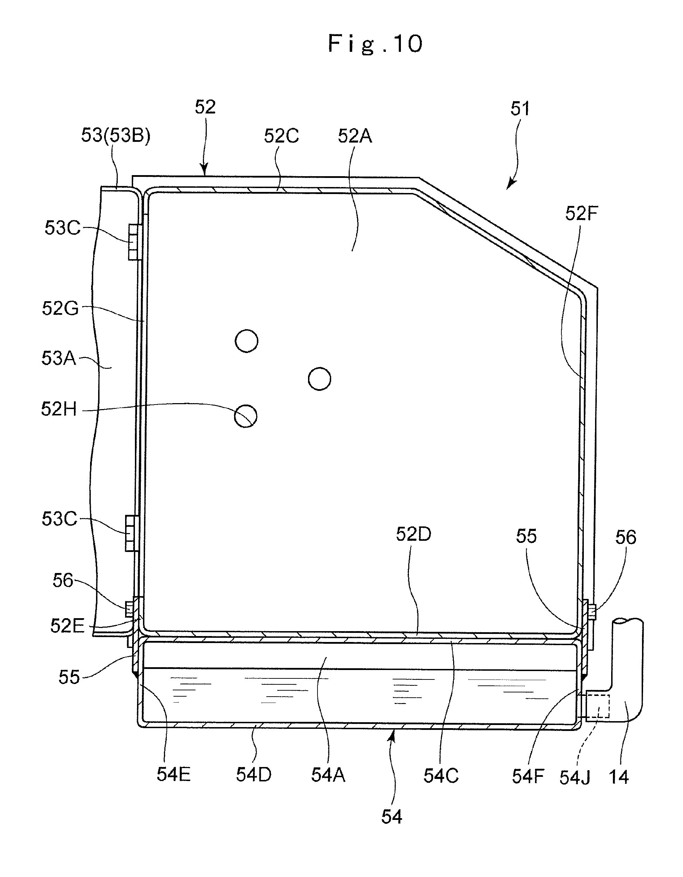

Next, Fig. 9 and Fig. 10 show a third embodiment in the present invention. The feature of the present embodiment lies in that a urea water solution tank is formed as a container composed of a member different from a tool box and is mounted adjacent to the tool box. It should be noted that, in the third embodiment, the component elements that are identical to those of the foregoing first embodiment will be simply denoted by the same reference numerals to avoid repetitions of similar explanations.

In the figure, designated at 51 is a tool box used in the third embodiment. The tool box 51 is, as similar to the tool box 31 in the first embodiment as shown in Fig. 2, located in the tool box accommodating space 25 surrounded by the front fender mounting plate 22, the rear fender mounting plate 23 and the ascending and descending step 24, which are provided in the chassis 17 of the lower traveling structure 16.

The tool box 51 is constructed of a box 52 and a lid member 53 to be described later, and is formed in a rectangular box shape extending in the front and rear directions as a whole. A urea water solution tank 54 to be described later is mounted under the box 52 to be adjacent thereto.

Denoted at 52 is the box constituting a main body portion of the tool box 51. The box 52 is surrounded by a front surface 52A, a rear surface 52B, a top surface 52C, a bottom surface 52D, an outer side surface 52E and an inner side surface 52F. An opening portion 52G is formed in the outer side surface 52E. A plurality of bolt insert holes 52H are drilled in the front surface 52A and the rear surface 52B for mounting the box 52 to the brackets 21 in the chassis 17 shown in Fig. 2.

Indicated at 53 is the lid member for closing the opening portion 52G of the box 52 to be capable of opening and closing. The lid member 53 is constructed of a flat plate portion 53A and a folded plate portion 53B provided in a frame shape at an outer periphery edge portion in the flat plate portion 53A. The lid member 53 is mounted to a front end side of the box 52 by hinge members 53C and rotates around the hinge members 53C for opening/closing the opening portion 52G of the box 52.

Designated at 54 is the urea water solution tank according to the third embodiment. The urea water solution tank 54 is formed as a closed container composed of a member different from the tool box 51 and is mounted adjacent to the tool box 51 at the bottom side thereof. Here, the urea water solution tank 54 is formed as a flat, rectangular closed container surrounded by a front surface 54A, a rear surface 54B, a top surface 54C, a bottom surface 54D, an outer side surface 54E, and an inner side surface 54F. A cylindrical water supply port 54G is formed in an upper end side of the rear surface 54B in the urea water solution tank 54 to protrude diagonally upwards, and an upper end side of the water supply port 54G is constructed to be closed by a cap 54H. Further, an outlet port 54J is formed to protrude at the lower end side of the inner side surface 54F. One end side of the pipe 14 shown in Fig. 4 is connected to a protruding end side of the outlet port 54J.

Indicated at 55 are mounting plates mounted in upper end sides of the outer side surface 54E and the inner side surface 54F in the urea water solution tank 54 respectively. The mounting plate 55 is formed of a flat plate extending in the front and rear directions and is fixed to each of the side surfaces 54E and 54F by means such as welding. The upper end sides of the respective mounting plates 55 protrude upwards from the top surface 54C of the urea water solution tank 54 and face with each other in the right and left directions.

In a case of mounting the urea water solution tank 54 to the box 52, lower end sides of the outer side surface 52E and the inner side surface 52F constituting the box 52 in the tool box 51 are placed in a state of being sandwiched by the respective mounting plates 55. In this state, bolts 56 are used to mount the respective mounting plates 55 on the respective side surfaces 52E and 52F in the box 52. As a result, the urea water solution tank 54 formed of the member different from the box 52 can be mounted at the lower side of the bottom surface 52D in the box 52 to be adjacent thereto.

The wheel type hydraulic excavator according to the third embodiment includes the tool box 51 and the urea water solution tank 54 as described above. According to the present embodiment, the urea water solution tank 54 formed as the closed container composed of the member different from the tool box 51 is mounted at the side of the bottom surface 52D in the box 52 constituting the tool box 51 to be adjacent thereto.

In consequence, the urea water solution tank 54 can be mounted by using the tool box 51 without reducing the accommodating space in the tool box 51. In a case where a defect occurs in the urea water solution tank 54, a new urea water solution tank 54 can be easily mounted to the tool box 51 by replacing the urea water solution tank 54.

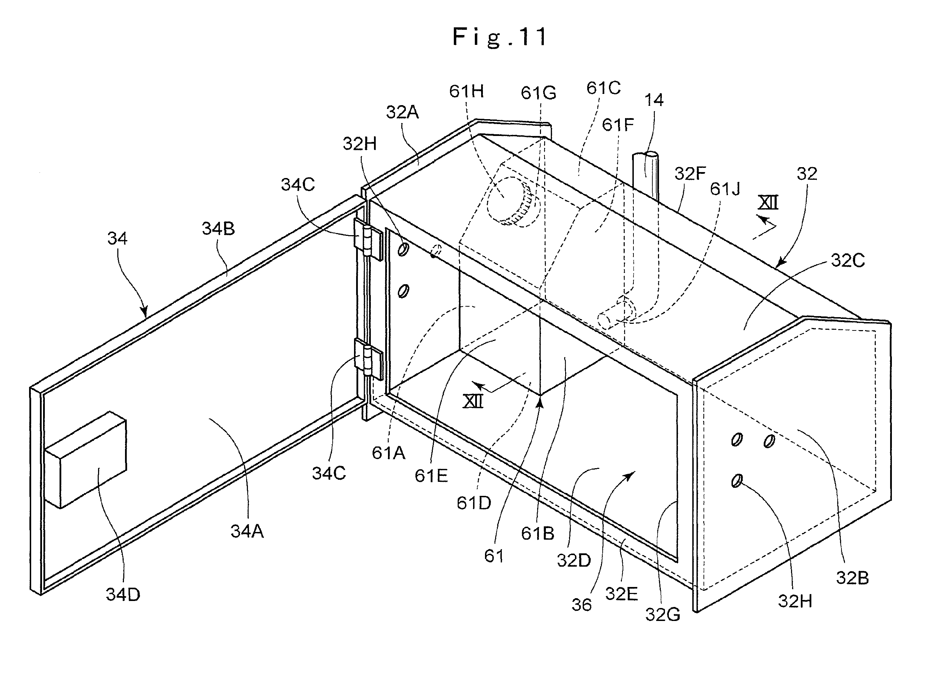

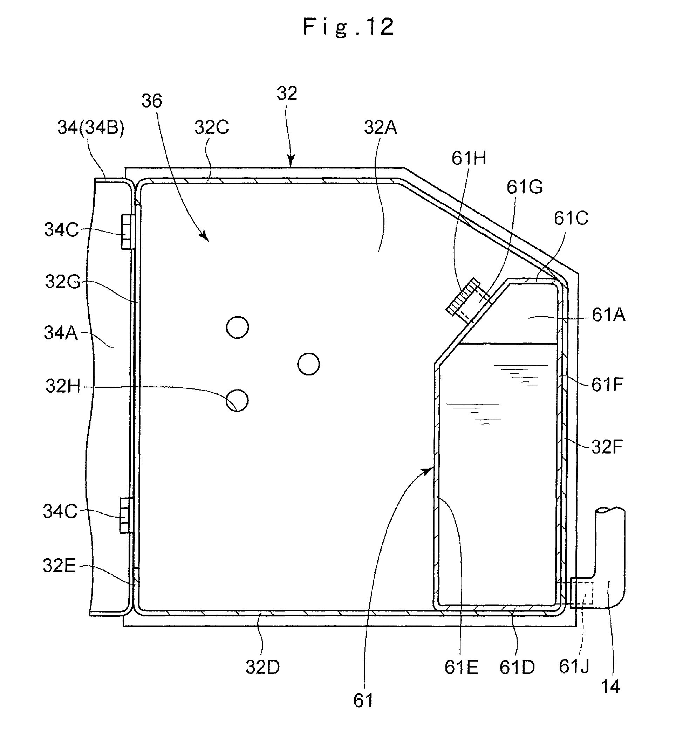

It should be noted that, the first embodiment described above exemplifies a case where the urea water solution tank 35 arranged in the box 32 in the tool box 31 is formed as the flat rectangular closed container having the small height dimension in the upper and lower directions. However, the present invention is not limited to this particular example. For instance, as a modification shown in Fig. 11 and Fig. 12, a urea water solution tank 61 may be arranged in the box 32 in the tool box 31. That is, the urea water solution tank 61 formed as a closed container composed of a member different from the box 32 is surrounded by a front surface 61A, a rear surface 61B, a top surface 61C, a bottom surface 61D, an outer side surface 61E and an inner side surface 61F. Further, the urea water solution tank 61 is formed in a longitudinal, rectangular box shape having a height dimension in the upper and lower directions longer than a length dimension in the front and rear directions. Further, the urea water solution tank 61 may be arranged, for example, in a state of being abutted against the front surface 32A of the box 32.

In this case, the urea water solution tank 61 is formed such that a water supply port 61G and a cap 61H closing the water supply port 61G are provided on an outer side surface 61E positioning in a side of the opening portion 32G in the box 32, and an outlet port 61J, which is connected to one end side of the pipe 14, is provided to protrude at a lower end side of the inner side surface 61F.

In addition, the first embodiment described above exemplifies a case where the urea water solution tank 35 is arranged in the left tool box 31 among the respective tool boxes 31 arranged in both the right and left sides of the chassis 17. However, the present invention is not limited to this particular example. For instance, the urea water solution tank 35 may be arranged in the right tool box 31, and on the other hand, the urea water solution tanks 35 respectively may be arranged in the right and left tool boxes 31. This construction may be likewise applied to the second and third embodiments.

Further, each of the embodiments described above exemplifies the wheel type hydraulic excavator 1 as the wheel type working vehicle. However, the present invention is not limited to this particular example, and may be widely applied to a wheel type working vehicle traveling on a road by front and rear wheels, such as a wheel type hydraulic crane, a wheel type lift truck, and so forth.

### DESCRIPTION OF REFERENCE NUMERALS

1: Wheel type hydraulic excavator (Wheel type working vehicle)
2: Revolving ring
3: Upper revolving structure
9: Engine
9B: Exhaust pipe
12: Urea selective reduction catalyst
13: Urea water solution injection device
15: Center joint
16: Lower traveling structure
17: Chassis
19: Front wheel
20: Rear wheel
22: Front fender mounting plate
22A: Front fender
23: Rear fender mounting plate
23A: Rear fender
24: Ascending and descending step
25: Tool box accommodating space
31, 41, 51: Tool box
32, 42, 52: Box
32G, 42G, 52G: Opening portion
34, 43, 53: Lid member
35, 46, 54, 61: Urea water solution tank
35G, 46A, 54G, 61G: Water supply port
35J, 46C, 54J, 61J: Outlet port

## Claims

1. A wheel type working vehicle comprising:
an automotive lower traveling structure (16); and an upper revolving structure (3) swingably mounted through a revolving ring (2) on said lower traveling structure (16) and provided with an engine (9) as a power source mounted thereon;
said lower traveling structure (16) being constituted by a chassis (17) on which right and left front wheels (19) and right and left rear wheels (20) are provided and a tool box (31, 41, 51) provided in said chassis (17) for accommodating tools and the like; and
an exhaust pipe (9B) of said engine (9) being provided with a urea selective reduction catalyst (12) for selectively reducing nitrogen oxides in an exhaust gas, **characterized in that**;
a urea water solution tank (35, 46, 54, 61) positioned upstream of said urea selective reduction catalyst (12) for reserving a urea water solution to be injected into said exhaust pipe (9B) is provided in said tool box (31, 41, 51) mounted in said chassis (17).

2. A wheel type working vehicle according to claim 1, wherein said chassis (17) is provided with:
a front fender mounting plate (22) positioned in rear of said front wheel (19) for mounting a front fender (22A) and a rear fender mounting plate (23) positioned in front of said rear wheel (20) for mounting a rear fender (23A) mounted therein to be spaced from each other,
an ascending and descending step (24) disposed between said front fender mounting plate (22) and said rear fender mounting plate (23) for ascending to and descending from said upper revolving structure (3), and
said tool box (31, 41, 51) disposed in a tool box accommodating space (25) surrounded by said front fender mounting plate (22), said rear fender mounting plate (23) and said ascending and descending step (24).

3. A wheel type working vehicle according to claim 1, wherein said tool box (31, 41) is constituted by a box (32, 42) of which an outer side surface (32E, 42E) directed outside is open and a lid member (34, 43) for closing an opening of said box (32, 42) to be capable of opening/closing,
said urea water solution tank (35, 46, 61) is provided in said box (32, 42), and
a water supply port (35G, 46A, 61G) of said urea water solution tank (35, 46, 61) is provided to be positioned in said box (32, 42), wherein said lid member (34, 43) is opened to supply said urea water solution through said water supply port (35G, 46A, 61G).

4. A wheel type working vehicle according to claim 3, wherein said urea water solution tank (35, 46, 61) is formed as a container different from said box (32, 42) or as a container integral with said box (32, 42).

5. A wheel type working vehicle according to claim 1, wherein said urea water solution tank (54) is formed as a container made of a member different from said tool box (51) to mount said container of said urea water solution tank (54) to said tool box (51) to be adjacent thereto.

## Amended claims

### Amended claims under Art. 19.1 PCT

**1.** (Amended) A wheel type working vehicle comprising:
an automotive lower traveling structure (16); and an upper revolving structure (3) swingably mounted through a revolving ring (2) on said lower traveling structure (16) and provided with an engine (9) as a power source mounted thereon;
said lower traveling structure (16) being constituted by a chassis (17) on which right and left front wheels (19) and right and left rear wheels (20) are provided and a tool box (31, 41, 51) provided in said chassis (17) for accommodating tools and the like; and
an exhaust pipe (9B) of said engine (9) being provided with a urea selective reduction catalyst (12) for selectively reducing nitrogen oxides in an exhaust gas, **characterized in that**;
a urea water solution tank (35, 46, 54, 61) positioned upstream of said urea selective reduction catalyst (12) for reserving a urea water solution to be injected into said exhaust pipe (9B) is provided in said tool box (31, 41, 51) mounted in said chassis (17),
said tool box (31, 41) is constituted by a box (32, 42) of which an outer side surface (32E, 42E) directed outside is open and a lid member (34, 43) for closing an opening of said box (32, 42) to be capable of opening/closing,
said urea water solution tank (35, 46, 61) is provided in said box (32, 42),
a water supply port (35G, 46A, 61G) of said urea water solution tank (35, 46, 61) is provided to be positioned in said box (32, 42), and
said lid member (34, 43) is opened to supply said urea water solution through said water supply port (35G, 46A, 61G).

**2.** A wheel type working vehicle according to claim 1, wherein said chassis (17) is provided with:
a front fender mounting plate (22) positioned in rear of said front wheel (19) for mounting a front fender (22A) and a rear fender mounting plate (23) positioned in front of said rear wheel (20) for mounting a rear fender (23A) mounted therein to be spaced from each other,
an ascending and descending step (24) disposed between said front fender mounting plate (22) and said rear fender mounting plate (23) for ascending to and descending from said upper revolving structure (3), and
said tool box (31, 41, 51) disposed in a tool box accommodating space (25) surrounded by said front fender mounting plate (22), said rear fender mounting plate (23) and said ascending and descending step (24).

**3.** (Canceled)

**4.** (Amended) A wheel type working vehicle according to claim 1, wherein said urea water solution tank (35, 46, 61) is formed as a container different from said box (32, 42) or as a container integral with said box (32, 42).

**5.** (Canceled)

Statement under Art. 19.1 PCT
According to the opinion of International Search Authority, it has been recognized that the invention according to claims 1, 2, and 5 each does not involve in an inventive step based upon Document 1 (JP2008-248607 A) and Document 2 (JP2008-223345 A) cited by International Search Report.

On the other hand, it has been recognized that the invention according to claims 3 and 4 is not described in any of the Documents and is unobvious to those skilled in the art.

Therefore, the invention according to a new claim 1 is made by combining claims 1 and 3 in the original application. Followed by it, claims 3 and 5 are canceled. In addition, claim 4 is amended to be dependent from a new claim 1 as a result of combining claim 3 with claim 1.
